# EUROPEAN PATENT APPLICATION

(11) **EP 0 819 865 A2**
(43) Date of publication of application: **21.01.1998**
(21) Application number: 97112216.3
(22) Date of filing: 17.07.1997
(51) Int. Cl.: F16F 7/02

(54) **Damping device for controlling the opening and closing of draw-down lids or doors of pieces of furniture**

(30) Priority: 19.07.1996 IT BO960110 U
(71) Applicant: Destro, Gianfranco, 35132 Padova (IT)
(72) Inventor: Destro, Gianfranco, 35132 Padova (IT)
(74) Representative: Porsia, Attilio, Dr.

(57) **Abstract**

On the opposite faces of the body (1) of the damping device, which is mounted so that it can turn on the hub (13), which is fastened perpendicularly to the internal side wall of the piece of furniture, are provided friction rings (20; 120) with which there work in conjunction shoulder rings (21; 121) integral with the hub and pushed against said friction rings by axial springs (22; 122) loaded by a nut (23) screwed on the hub itself and by the reaction against an end neck (113) of the said hub. The body of the damping device may be fastened to the articulated arm (2) that connects up to the lid or door S of the piece of furniture, either directly or with the interposition of a ring (201) and of means of coupling (25) of a free-wheel type, so that the effects of the damping device are obtained when said body (1) is rotated in either direction or in only one of the directions.

## Description

For controlling doors or lids articulated on horizontal hinges, for example for controlling the closing of draw-down lids of furniture, such as writing desks, damping devices of a rotating type are known, equipped with a hub which is fixed perpendicularly to an internal side wall of the piece of furniture and on which is mounted a body which is able to revolve, the rotation of which is controlled by friction means, and which is equipped with a tangential attachment which, by means of an articulated arm, is connected to the lid or door of the piece of furniture. Damping devices of this type are, for example, described in the documents EP-A-329.788, EP-A-458.454, and EP-A-576.672. All these known devices are difficult to adjust and adapt to the various needs of use, are relatively complex in construction, and are high-priced.

The present invention concerns a damping device presenting an extremely simplified construction and a high technological reliability, which is able to turn in either direction of rotation or in a single direction and can be easily adjusted and adapted to meet any need of use.

The characteristics of the damping device referred to and the advantages deriving therefrom will appear evident from the following description which refers to the figures of the attached drawings, where:
Fig. 1 is a side view of the damping device with the arm connecting it to the lid or door of the piece of furniture, illustrated in the open position (solid line) and in the closed position (dashed and dotted line);
Fig. 2 is a detail of the damping device of Fig. 1 showing a cross section along the plane represented by the line II-II of Fig. 1;
Fig. 3 presents a view in perspective of one of the springs used in the damping device;
Fig. 4 illustrates a variant of the damping device of Fig. 2 in a single-action modified version;
Fig. 5 is a side view of a further variant of the damping device, with elastic means for compensation of the weight of the door or lid of the piece of furniture, where the damping device is without some components and where it is illustrated with the arm that connects up to the door or lid in the open position (solid line) and in the closed position (dashed and dotted line);
Fig. 6 is a cross section viewed according to the plane indicated by the line VI-VI of Fig. 5, in enlarged scale;
Fig. 7 is a detail viewed according the plane indicated by the line VII-VII of Fig. 6; and
Fig. 8 presents a perspective view of the elastic means of compensation used in the embodiment shown in Figs. 5 and 6.

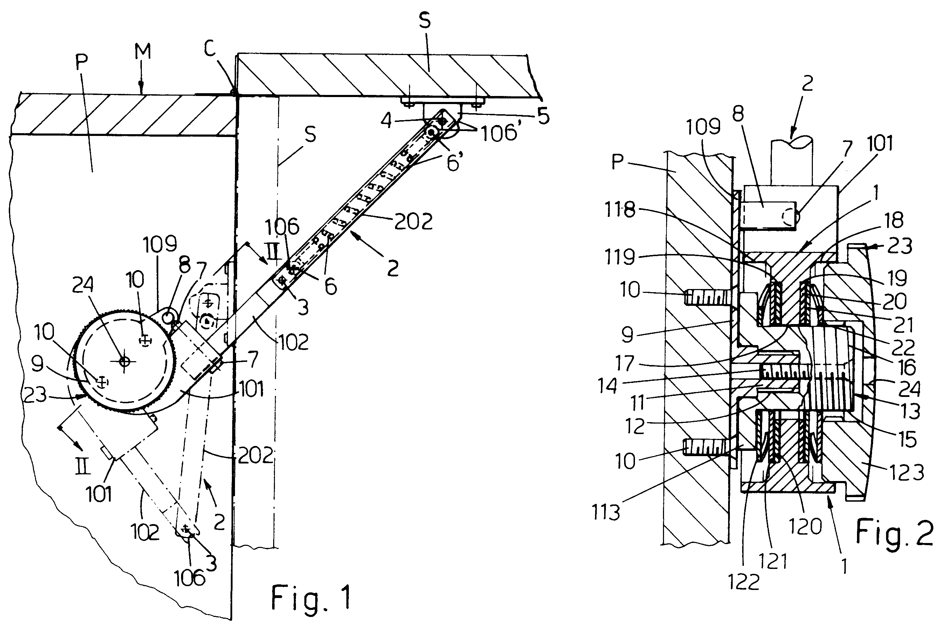

With reference to the drawings, and with particular reference to Figs. 1, 2 and 3, the damping device illustrated comprises a body 1 equipped with a tangential attachment 101 fastened to the part 102 of an arm 2 articulated in 3 to the other part 202 of the same arm, which is in turn articulated in 4 to a support 5 fixed to the lid or door S of the piece of furniture M, articulated in turn to the horizontal hinge C. The links 3 and 4 are parallel to the hinge C. The body 1 is mounted, so that it can revolve, on the internal face of the side wall P of the piece of furniture, parallel to the hinge C, so that the entire assembly is able to open up starting from the folded or closed position illustrated in Fig. 1 with a dashed and dotted line and corresponding to the closed position of the door or lid, to the position indicated by the continuous line corresponding to the door or lid opened. Means are provided for stabilizing the door or lid in the two positions, the open one and the closed one, with reciprocal locking by means of friction and/or with snapping into position of the parts 102-202 and of the part 202 with respect to the support 5. These means may be, for example, similar to the ones used for keeping the blade of a penknife open or closed and may be placed at the point of articulation 3, or else may, for instance, include a double sprung slider 6-6' of the type illustrated by the dashed line in Fig. 1, which is able to slide axially in the part 202, which is hollow and of polygonal section, for example square section, and which is provided at the ends with wheels which can turn and which work in conjunction with recessed parts 106 and 106' provided at the end of the part 102 and on the said support 5. When the arm 2 is in the fully extended position, a screw 7 set so that it can be adjusted in the region where the forearm 102 joins to the attachment 101 of the body 1 works in conjunction with a stop 8 set perpendicular to the wall P and integral with the radial attachment 109 of a disk of known type 9 fastened with screws 10 onto the said wall P. The disk 9 carries on it, as an integral part thereof and set axially and protruding therefrom, a pin 11 on which is mounted, with its own seat 12, a hub 13 that must be fastened to the said disk, without any possibility of relative rotation, for example by means of the grooved shape of the said pin 11 and seat 12. A screw 14 holds the hub 13 locked axially on the pin 11 - see later. The hub 13 has at its base a neck 113 and has at least one longitudinal flattened portion 15 and is threaded at least on the end portion, as indicated by 16.

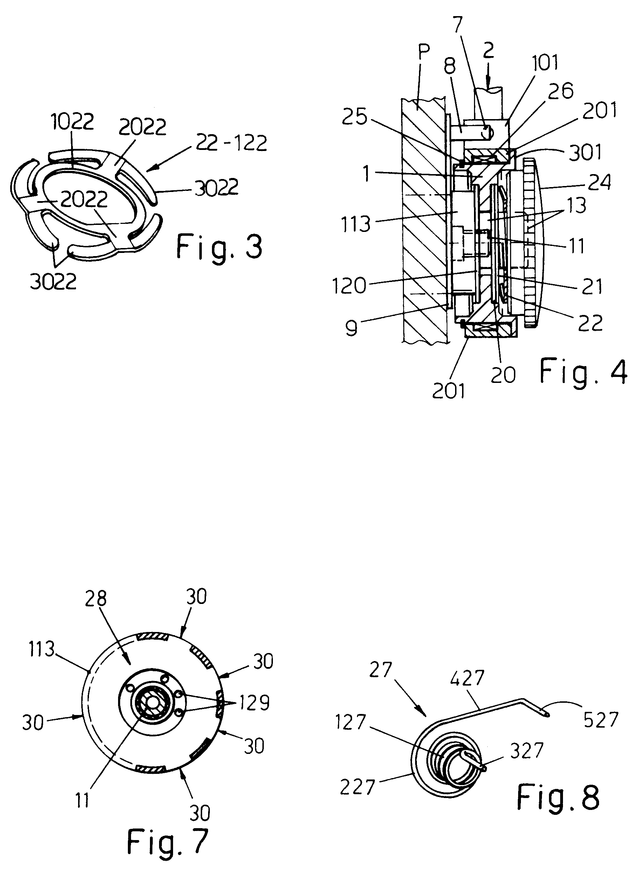

The body 1 of the damping device has a central hole 17 whereby it can be mounted so that it can turn on the hub 13, and the same body 1 is provided with wide cylindrical seats, which are equal and set opposite to one another 18; 118, with bottom recesses 19; 119, which are equal and in which are mounted friction rings 20; 120 made of any suitable friction material. The said rings are surmounted by rings 21; 121 made of steel or other suitable material, which via the axial hole work in close conjunction with the profile of the hub 13, so as to be keyed to it, but with the possibility of axial displacement. The rings 21; 121 are pushed against the aforesaid friction rings by axial springs 2; 122, for example of the type illustrated in the detail of Fig. 3, equipped with an annular body 1022 having a shape such as to mate snugly with the profile of the hub 13 so as to be keyed thereto, but with the possibility of axial displacement, since this body is provided with three radial attachments that are set at equal angular distances apart 2022, integral with the intermediate part of three laminated springs 3022, arched and set on a circumference 1022 concentric to said body. Springs of this type are known, for example, in the sector of fishing reels. The spring 122 rests against the neck 113 of the hub 13, whilst the spring 22 rests against a nut 23, which is screwed on the hub, partly engages the chamber 18 and is equipped with a head 123 knurled on the outside perimeter so that it can be easily turned. The nut 23 is a cap nut to enable compression of the springs 22; 122 at a maximum and preset value and axially has a hole 24 so that a screwdriver can be inserted to turn the screw 14 which fastens the said hub to the pin 11. By adjusting the screwing of the nut 23 on the hub 13 the compression of the springs 22; 122 is adjusted, and consequently the friction that opposes rotation of the body 1 on the hub 13 is modified. In this way, it is possible to regulate the degree of braking action of the damping device so as to adapt it to the different weight of the lid or door S.

It remains understood that, instead of the springs illustrated in Fig. 3, springs of another type may be used, such as springs even of an elastomer type.

In order to make manufacture of the damping device referred to herein cheaper and to prevent the body 1 from shifting axially on the hub 13 during the phase of adjustment of the screw 23, with the possibility of the body touching the disk 9, and above all with the possibility of anomalous stresses being exerted on the links of the arm 2, it may be possible to envisage the elimination of the spring 122 and possibly also of the ring 121, so that the neck 113 of the hub will operate directly in contact with the friction ring 120, as illustrated in Fig. 4.

Fig. 4 also shows another variant, according to which the damping device referred to herein remains passive in the phase of opening of the lid or door S, whereas it goes into operation only during the closing phase of the said lid or door. In this respect, it differs from the solution of Fig. 2, where the damping device is active whichever the direction of rotation. In the solution illustrated in Fig. 4, the body 1 has an externally cylindrical shape and is surmounted by a ring 201 which carries tangentially the said attachment 101 connecting up to the arm 2, which is held back axially by the stops 301; 25 and which is mounted on the said body 1 with the interposition of a coupling 26 of the type used in free-wheels, so that when the lid or door S is raised or lowered, for example, opened, the ring 201 rotates freely on the body 1, whereas when the lid or door is closed, the ring 201 remains integral with the body 1, which turns under the control of the friction means.

The friction rings 20; 120 may be, for example, of the same material used for manufacturing brake blocks or brake pads for motor vehicles or may be made of any material suitable for the purpose and of limited wear.

It is evident that, by modifying the coupling of the body 1 on the hub 13, it is possible to adapt the device for being mounted on the right-hand wall or left-hand wall of a piece of furniture in a manner which may altogether be readily imagined and easily done by technicians working in the sector.

With reference to Figures from 5 to 8, there is now illustrated an embodiment of the damping device which envisages the use of elastic means to compensate or counterbalance the weight of the lid or door S of the piece of furniture M, so as to facilitate opening of the lid or door and improve the overall operation of the damping device. The elastic means used for compensating or counterbalancing is illustrated in Fig. 8 and consists of a spring 27 of composite shape, provided with an initial part 127 of a helical shape and of a second part 227 of a flat spiral shape or spiral of Archimedes. These parts of the spring are mutually coaxial, and the first part 127 presents at its end an attachment 327 parallel to the axis of the spring and facing outwards, whereas the second part 227 presents a rectilinear portion 457 with an end attachment 527 which is also parallel to the axis of the spring and oriented in the same direction as the said attachment 327.

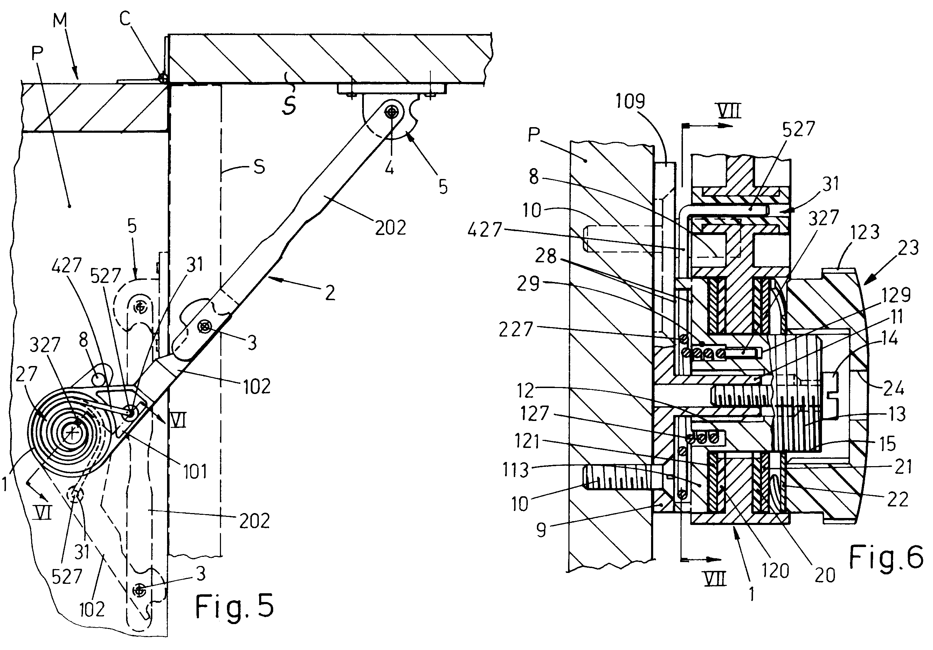

From Figs. 5, 6 and 7 it may be noted that on the base of the neck 113 of the hub 13 is made coaxially a cylindrical seat 28 which communicates with a coaxial seat 29 having an annular shape and a smaller diameter, which in part engages the said hub 13 and which is provided on the bottom with holes 129 in the appropriate number, parallel to the axis of the damping device and set at equal angular distances apart. The seat 29 is sized so as to contain with sufficient freedom of movement the helical spring part 127 of the said spring 27, and in its bottom holes 129 is clamped the end attachment 327 of the same spring. The seat 29 is instead of such a size as to house with sufficient allowance the flat spiral part 227 of the spring 27, and this seat is provided at the sides with openings 30 which are set at equal angular distances apart, such that the rectilinear portion 427 of the same spiral part can pass through them. The said spiral part, with the end attachment 527 fastens in one of the ends of a through seat 31 parallel to the axis of the damping device and made on the tangential attachment 101 of the rotating body 1 of the damping device.

From Fig. 5 it is evident that the spring 27 is oriented in such a way as to be loaded when the lid or door S of the piece of furniture is closed, so as to compensate the weight of the lid or door itself. The presence of this spring facilitates the movement of opening of the lid or door by the user and, in the subsequent closing phase of the lid or door, improves the operation of the damping device in that the friction means work gradually and progressively and are subjected to limited stresses. As the weight of the lid or door varies, it will be possible to modify the degree of preloading of the spring 27 by fastening the end attachment 327 into the most appropriate of the said bottom holes 129 and by inserting the rectilinear portion 427 into the most appropriate of the said openings 30 of the neck 113.

## Claims

1. Adjustable rotating damping device, particularly for controlling the opening and closing of draw-down lids or doors of pieces of furniture, such as writing desks, of the type comprising a hub or pin (13) fixed perpendicularly to an internal side wall of the piece of furniture and on which is mounted a body (1) in such a way that it can turn, with the interposition of means of friction, the said body (1) being provided with a tangential attachment (101) integral with the end of an articulated arm (2) connected by the other end to the lid or door S of the piece of furniture, and the axes of articulation (3; 4) of which are parallel to the said hub, characterized in that the said body (1) is provided with mutually opposite cylindrical chambers (18; 118) with bottom recesses (19;119) in which are housed rings (20; 120) made of friction material, against which rest rings made of metal or other suitable material (21; 121) keyed on the said hub and which are pushed against the said rings by the action of at least one elastic means (22) of an axial type mounted at least on the free end portion of the hub that is opposite to that fastened to the wall of the piece of furniture and which is provided with a stop neck (113), the said free end portion of the hub being threaded and engaged by an adjustment nut (23) which enables modification of the compression of said elastic means, and consequently the braking by means of the friction to which the said body (1) is subjected during rotation on the hub.

2. Damping device according to Claim 1, in which an additional elastic means of an axial type (122) is provided between the stop neck (113) of the hub and the nearby ring (121) keyed on the hub itself and which works in conjunction with the corresponding friction ring (120).

3. Damping device according to Claim 1, in which the stop neck (113) of the hub (13) operates directly in contact with the nearby friction ring (120).

4. Damping device according to any one of the foregoing claims 1 to 3, in which the hub (13) is provided with at least one longitudinal flattened portion (15), and the friction rings (21; 121), which work in conjunction with the friction rings (20; 120), have an internal hole of a shape such as to correspond to the profile of the said hub so as to be keyed onto the latter, but with the possibility of axial displacement.

5. Damping device according to any one of the foregoing claims 1 to 4, in which the elastic means used (20; 122) are of the type provided with an annular body (1022) with radial attachments (2022) which carry respective laminated springs (322) arched and arranged in the sector of a circle.

6. Damping device according to Claim 5, in which the body (1022) of the axial springs (22; 122) has a hole with an internal diameter that mates with the profile of the hub (13) so as to be keyed thereto, but with the possibility of axial displacement.

7. Damping device according to Claim 1, in which the elastic means used (22; 122) are elastomer rings.

8. Damping device according to Claim 1, in which the nut (23) for compressing the axial elastic means is a cap nut and is provided axially with a small hole (24) so that a screwdriver may be inserted through it to screw or unscrew a screw (14) which fastens the hub axially on the axial pin (11) of a disk (9) fixed on the wall of the piece of furniture, the said pin and the corresponding seat for coupling with the hub being provided with keyways.

9. Damping device according to any one of the foregoing claims, in which the body (1) of the said damping device has a symmetrical shape, so that the damping device itself may be adjusted for assembly either on the right-hand wail or on the left-hand wall of a piece of furniture.

10. Damping device according to Claim 1, characterized in that the body (1) of the said damping device has set around it, in a manner that it is free to turn, a ring (201) to which the damping device is connected by the interposition of couplings (26) typical of a free-wheel, the said ring (201) being provided with a tangential attachment (101) with which the end of the articulated arm (2) is integral, the said articulated arm being connected to the lid or door of the piece of furniture, the entire assembly being conceived so that the damping device will be activated only while the said body is turning in one direction, for example during closing or opening of the lid or door of the piece of furniture, according to whether the opening of the lid or door takes place either by rotating upwards or rotating downwards.

11. Damping device according to Claim 1, characterized in that it is equipped with at least one elastic means of compensation or counterbalancing (27) which is loaded in the closing phase of the lid or door S and which expands in the opening phase and which, through appropriate means, can be adjusted in the degree of preloading with the aim of compensating or counterbalancing the weight of the lid or door of the draw-down type, of which it is necessary to control the opening and closing movement.

12. Damping device according to Claim 11, in which the elastic means for compensating or counterbalancing (27) comprises a composite spring made up of one part (227) which is a flat spiral housed with sufficient allowance in a cylindrical seat (28) made coaxially on the base of the neck (113) of the hub (13) of the said damping device, and the said part of spring being provided with a rectilinear end portion (427) which passes through at least one side opening (30) of said seat (28) and which, with an end attachment of its own (527) parallel to the axis of the spring, is fastened to one of the ends of a through seat (31) made transversely on the tangential attachment (101) of the rotating body (1) of the damping device, the other end of the said flat part (227) of the spring being integral with one part of spring, a helical part (127) housed with sufficient allowance in an annular seat (29) made coaxially in the said hub, this latter part of spring being equipped on the other end with an attachment (327) parallel to the axis of the damping device, the said attachment being fastened in a hole (129) made on the base of the said annular seat.

13. Damping device according to Claim 12, in which the seat (28) for housing the flat spiral part (227) of the spring is equipped with a number of side openings (30) set at an equal angular distance apart, and the bottom of the annular seat (29) which houses the helical part (127) of the spring is equipped with a number of holes (129) set at an equal angular distance apart, so that as the weight of the lid or door S that must be controlled by the damping device referred to herein varies, it is possible to modify the degree of preloading of the compensation spring (27) choosing the one that is most appropriate of the said side openings (30) and/or the one that is most appropriate of the said bottom holes (119) respectively for passing the straight portion of the said flat spiral part of spring and for fastening the end attachment of the said helical part of spring.
